# EUROPEAN PATENT SPECIFICATION

(11) **EP 1 782 935 B1**
(45) Date of publication and mention of the grant of the patent: **29.09.2010**
(21) Application number: 06022755.0
(22) Date of filing: 31.10.2006
(51) Int. Cl.: B29C 33/10, B29C 45/34, B29C 39/42

(54) **Metal mold for resin molding**
Metallform zum Giessen von Harz
Moule métallique pour moulage de résine

(30) Priority: 02.11.2005 JP 2005319825
(43) Date of publication of application: 09.05.2007
(73) Proprietor: KABUSHIKI KAISHA TOSHIBA, Tokyo (JP)
(72) Inventor: Komiya, Gen, Tokyo (JP); Maxima, Satoshi, Tokyo (JP); Saito, Toshihisa, Tokyo (JP); Matsuoka, Mika, Tokyo (JP); Kinoshita, Susumu, Tokyo (JP); Sakaguchi, Osamu, Tokyo (JP); Miyagawa, Masaru, Tokyo (JP); Sato, Junichi, Tokyo (JP)
(74) Representative: HOFFMANN EITLE

(56) References cited:
- EP-A- 1 074 367
- EP-A1- 0 842 749
- DE-A1- 2 524 538
- DE-A1- 10 033 702
- JP-A- 2 209 214
- JP-A- 4 156 321
- JP-A- 5 064 820
- JP-A- 56 123 811
- JP-A- 56 127 439
- JP-A- 60 127 112
- JP-A- 2000 015 668
- US-A1- 2 290 510
- US-A1- 3 892 508

## Description

### BACKGROUND OF THE INVENTION

### 1. Field of the Invention

The present invention relates to a metal mold for resin molding whereby insulation defects of molded articles can be suppressed, and electrical performance and mechanical performance improved.

### 2. Description of the Related Art

Molded products manufactured by injecting insulating material such as epoxy resin into a metal mold for resin molding under vacuum have excellent electrical properties and mechanical properties and are widely used in electrical equipment. However, insulation defects called voids may be formed in the molded product if traces of air remain in the metal mold for resin molding.

In order to solve this, as stated in Laid-open Japanese Patent Application No. H. 5-64820 (JP 05064820), the technique is previously known of providing an exhaust port in the metal mold for resin molding, and extruding remaining air from this exhaust port when injecting the epoxy resin.

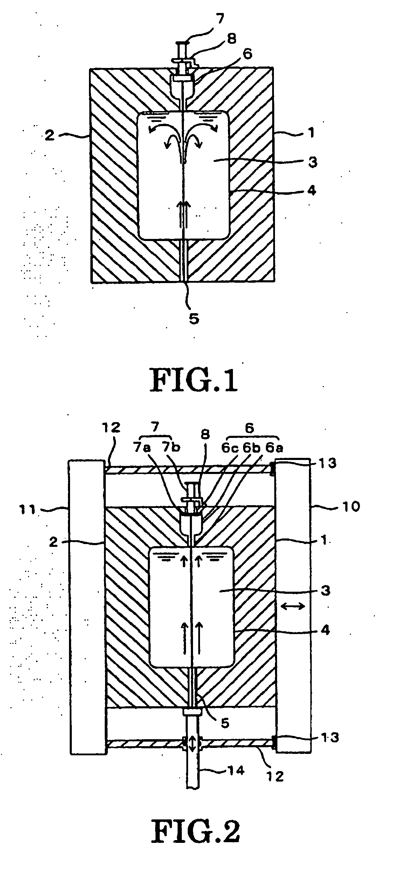

As shown in Figure 1, a metal mold for resin molding of this type is divided into two parts shown on the left and on the right in the Figure, namely, a first metal mold 1 and a second metal mold 2. Also, an injection port 5 for injection of epoxy resin 3 into the cavity 4 is provided at the lower part as shown in this Figure and an exhaust port 6 is provided at the upper part in this Figure. In this exhaust port 6, a movable valve 7 such as to float on the epoxy resin 3 is provided so as to be freely movable in the vertical direction as shown in the Figure. The movable valve 7 is freely detachable and is fixed to one or other of the metal molds 1 (2) by a support fitting 8 such as to permit free movement thereof in the vertical direction in the Figure.

When carrying out molding, the first metal mold 1 and second metal mold 2 are closed, and are arranged in a prescribed vacuum of for example pressure 150 Pa. At this time point, the movable valve 7 is positioned at the lower part in the Figure below the exhaust port 6, due to its own weight, the exhaust port 6 being in an opened condition and the interior of the cavity 4 being under vacuum. Then, when liquid epoxy resin 3 is injected from the injection port 5, the epoxy resin 3 in the cavity 4 fills the cavity towards the upper direction from below in the Figure, and any traces of air are extruded from the exhaust port 6.

When filling has been effected with the epoxy resin 3 as far as the exhaust port 6, the movable valve 7 is moved upwards as shown in the Figure to close the exhaust port 6. Epoxy resin 3 therefore cannot leak to outside the metal molds and 1 and 2. A molding of the desired shape is then obtained by applying a prescribed pressure of for example 300 kPa to the epoxy resin 3, thermal hardening, and releasing from the mold.

In order to improve productivity, a high-speed molding method is known wherein, as described in Laid-open Japanese Patent Application No. 2001-38774, the first metal mold 1 and second metal mold 2 are raised to a high temperature of for example at least 120 °C and epoxy resin 3 is injected into the cavity 4 in a short time. Even in this high-speed molding method, traces of air can be extruded from the exhaust port 6 as described above, in order to suppress insulation defects such as voids.

However, conventional metal molds for resin molding as described above are subject to the following problems.

After closing the exhaust port 6, the epoxy resin 3 in the cavity 4 is pressurized, but this pressurization is abruptly discontinued when a prescribed value is reached. Consequently, as shown by the arrows in Figure 1, the direction of flow of the epoxy resin 3 in the cavity 4 changes upstream of the exhaust port 6, so that the flow becomes a random flow. Thermal hardening is then performed in this condition. In particular, in the high-speed molding method, the flow of epoxy resin 3 is fast, so large-scale random flow is generated, producing thermal hardening.

Consequently, the air that is extruded to the exhaust port 6 may again be entrained into the cavity 4 by this random flow. If air is entrained into the cavity 4, voids, producing insulation defects, are formed, adversely affecting electrical properties such as partial discharge of the molding or mechanical properties such as the bending strength or tensile strength.

The present invention was made in order to solve the problems described above, its object being to provide a metal mold for resin molding whereby moldings can be obtained with improved electrical and mechanical properties by positively accumulating the extruded air at the exhaust port.

### SUMMARY OF THE INVENTION

Accordingly, one object of the present invention is to provide a novel metal mold for resin molding.

According to one aspect of the present invention there is provided a metal mold for resin molding comprising: (i) a metal mold formed with a cavity for obtaining a molding of a prescribed shape; (ii) an injection port, for injection of epoxy resin into said cavity, arranged at a lower part of said metal mold; (iii) an exhaust port, for exhausting air within said cavity, provided in an upper part of said metal mold; and (iv) a movable valve having a resilient member adapted to close said exhaust port in response to filling of an interior of said cavity with said epoxy resin; wherein said exhaust port comprises: (a) a small-diameter section connected with said cavity; (b) a large-diameter intermediate section; and (c) an exhaust section communicating with an outside; and wherein said movable valve comprises a floating section and a pin, the floating section of said movable valve is arranged to be freely movable in a vertical direction in said large-diameter intermediate section; and wherein the floating section of the movable valve is adapted, in response to pressurization of said epoxy resin, after closure of said exhaust port by said floating section moving upwards in response to filling of the cavity, to deform and to cause a change of pressure to occur in gradual fashion.

By arranging to close the exhaust port by means of the deformation of a movable valve employing a resilient member provided at the exhaust port of the metal mold, the change in pressure during pressurization and discontinuance of pressurization of the epoxy resin with which the cavity is filled can be made to occur in gradual fashion, so a molding with improved electrical properties and mechanical properties can be obtained.

### BRIEF DESCRIPTION OF THE DRAWINGS

More complete appreciation of the present invention and many of the attendant advantages thereof will be ready obtained as the same becomes better understood by reference to the following detailed description when considered in connection with the accompanying drawings, wherein:
Figure 1 is a cross-sectional view showing the construction of a conventional metal mold for resin molding;
Figure 2 is a cross-sectional view showing the construction of a metal mold for resin molding according to a first embodiment of the present invention;
Figure 3A and Figure 3B are detail cross-section views given in explanation of the operation of the movable valve of the metal mold for resin molding according to the first embodiment of the present invention;
Figure 4 is a view given in explanation of the change of pressure of the epoxy resin in the cavity according to the first embodiment of the present invention; and
Figure 5 is a detail cross-sectional view of a metal mold for resin molding according to a second embodiment of the present invention.
Figure 6 is a detail cross-sectional view of a metal mold for resin molding according to a modified example of the present invention.

### DETAILED DESCRIPTION OF THE PREFERRED EMBODIMENTS

Referring now to the drawings, wherein like reference numerals designate identical or corresponding parts throughout the several views, and more particularly to Figure 2 to Figure 4 thereof, one embodiment of the present invention will be described.

An embodiment of the present invention is described below with reference to the drawings.

### (First embodiment)

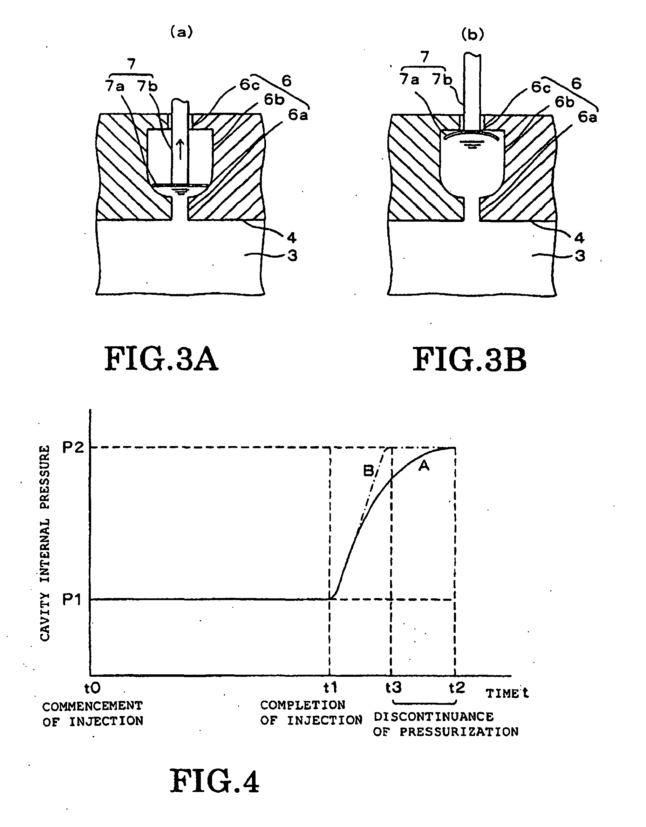

First of all, a metal mold for resin molding according to a first embodiment of the present invention will be described with reference to Figure 2 to Figure 4. Figure 2 is a cross-sectional view showing the construction of a metal mold for resin molding according to a first embodiment of the present invention; Figure 3 shows detail cross-section views given in explanation of the operation of the movable valve of the metal mold for resin molding according to the first embodiment of present invention; and Figure 4 is a view given in explanation of the change of pressure of the epoxy resin in the cavity according to the first embodiment of the present invention. Structural parts that are the same as in the conventional metal mold are given the same reference symbols in the Figures.

As shown in Figure 2, a metal mold for resin molding is divided into two parts shown on the left and on the right in the Figure, namely, a first metal mold 1 and a second metal mold 2. Also, an injection port 5 for injection of epoxy resin 3 into the cavity 4 is provided at the lower part as shown in this Figure and an exhaust port 6 is provided at the upper part in this Figure. The exhaust port 6 comprises a small-diameter section 6a, a large-diameter intermediate section 6b connected with the cavity 4, and an exhaust section 6c that communicates with the outside. The large-diameter section 6b may be for example of tubular shape, dome shape or pillar shape. Moldings of prescribed shape are obtained using the cavity 4 formed by the metal molds 1 and 2.

A movable valve 7 such as to float on the epoxy resin 3 is provided in the large-diameter section 6b of the exhaust port 6 so as to be freely movable in the vertical direction as shown in the Figure. The movable valve 7 comprises a floating section 7a and a pin section 7b: the floating section 7a comprises a resilient member having resilience, such as a spring plate or silicone rubber. Also, it may be made of thin plate shape comprising material such as fluorine-based resin, creating resilience, and may be heat resistant. The pin section 7b is freely detachable and is fixed to one or other of the metal molds 1 (2) by a support fitting 8 such as to permit free movement thereof in the axial direction.

The first metal mold 1 is fixed to a first heating plate 10 in the left/right direction in the Figure and the second metal mold 2 is fixed to a second heating plate 11. One end of a vacuum enclosure 12 that can be used to evacuate the metal molds 1, 2 to vacuum is fixed to the second heating plate 11. A gasket 13 is provided at the other end of the vacuum enclosure 12 and is tightly fixed to the first heating plate 10. A resin injection pipe 14 for injection of epoxy resin 3 is detachably provided in airtight fashion at the injection port 5 in the lower part in the Figure of the vacuum enclosure 12.

Then, when manufacturing a molding, first of all, the first metal mold 1 and second metal mold 2 are firmly closed by a closing device, not shown, heated to for example a temperature of 180 °C, and the interior of the vacuum enclosure 12 is evacuated to a prescribed vacuum of for example pressure 150 Pa. At this time point, the floating section 7a of the movable valve 7 is positioned at the lower part in the Figure below the exhaust port 6, due to its own weight, the exhaust port 6 being in an opened condition and the interior of the cavity 4 being under vacuum.

The resin injection pipe 14 is then connected with the injection port 5 and liquid epoxy resin 3 is injected. When this done, the interior of the cavity 4 is filled with epoxy resin 3 from the lower part in the Figure towards the upper part, residual air being extruded from the exhaust port 6. Since the diameter of this exhaust port 6 changes from the small-diameter section 6a to a large-diameter section 6b, the speed of the airflow passing through the small-diameter section 6a is fast, facilitating extrusion of residual air from within the cavity 4.

When filling with the epoxy resin 3 has been effected as far as the exhaust port 6, as shown in Figure 3A and Figure 3B, the floating section 7a of the movable valve 7 floats on the epoxy resin 3 and moves in the upwards direction in the Figure through the large-diameter section 6b. This floating section 7a is then pressed onto the exhaust section 6c, so that the exhaust port 6 is thereby closed. After this closure, the epoxy resin 3 is pressurized to a prescribed pressure of for example 300 kPa. The floating section 7a of the movable valve 7 is deformed by this pressurization, being gradually bent into a bowl shape about the exhaust section 6c.

The pressure change of the epoxy resin 3 when the floating section 7a is thus bent is described with reference to Figure 4.

At the commencement of injection at time t0, the interior of the cavity 4 is at a pressure of P1 (for example P1=150 Pa). When injection of the epoxy resin 3 proceeds, at the time t1, the exhaust port 6 is closed, and injection is terminated. After this, the interior of the cavity 4 is pressurized to a pressure P2 (for example P2=300 kPa), and at the time t2 pressurization is discontinued. Since pressurization is effected whilst the floating section 7a is being deformed and this pressurization is then discontinued, the epoxy resin 3 undergoes pressure change as shown by the continuous line A, in which its pressure gradually rises to reach the pressure P2. The flow of the epoxy resin 3 therefore does not tend to become turbulent and the epoxy resin 3 can easily be made to flow in a fixed direction towards the exhaust port 6 as shown in Figure 2. Consequently, entrainment of residual air in the vicinity of the exhaust port 6 into the cavity 4 can be suppressed.

When pressurization is discontinued, the epoxy resin 3 undergoes thermal hardening in the cavity 4, and, when released from the mold after hardening, a molding in which insulation defects are suppressed can be obtained. The epoxy resin 3 that hardens at the exhaust port 6 and injection port 5 is removed by mechanical processing after release from the mold.

It should be noted that, in the conventional method, as shown by the single-dotted chain line B, pressurization is discontinued at a time t3 that is shorter than the time t2 after completion of injection at the time t1. Since, with this mode of pressure change, there is an abrupt rise in pressure, followed by a sudden discontinuance at the time t3, the direction of flow of the epoxy resin 3 easily becomes random. In particular, in the high-speed injection method, there is shorter time between pressurization and discontinuance of pressurization, so the flow of epoxy resin 3 can easily become turbulent. However, since the change of pressure occurs more gradually whilst the movable valve 7 is being deformed, disturbance of the direction of flow of the epoxy resin 3 is unlikely, which is more suitable for a high-speed molding method.

The length of the small-diameter section 6a of the exhaust port 6 is 10 mm to 50 mm. This is because, if the length of the small-diameter section 6a is less than 10 mm, epoxy resin 3, whose viscosity has become low, flows into the large-diameter section 6b from the cavity 4 in a short time, so the effect of extruding residual air is small; but if the length of the small-diameter section 6a is more than 50 mm, the viscosity of the epoxy resin 3 in the small-diameter section 6a rises, making it difficult to control the pressure within the cavity 4.

With a metal mold for resin molding according to the first embodiment described above, a movable valve 7 that closes this exhaust port 6 while being bent by the pressurization of the epoxy resin 3 is provided at the exhaust port 6 provided by the first metal mold 1 and second metal mold 2. Consequently, the change in pressure of pressurization and discontinuance of pressurization of the epoxy resin 3 in the cavity 4 is made gradual, so entrainment of air that was extruded from the cavity 4 back into the cavity 4 can be suppressed, making it possible to obtain moldings of improved electrical and mechanical properties.

### (Second embodiment)

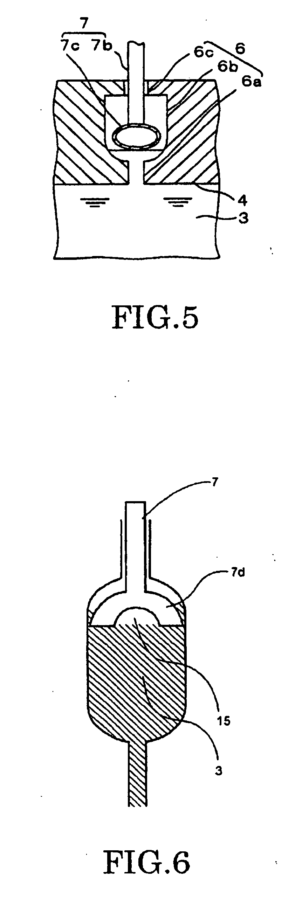

Next, a metal mold for resin molding according to a second embodiment of the present invention is described with reference to Figure 5. Figure 5 is a detail cross-sectional view of a metal mold for resin molding according to a second embodiment of the present invention.

The point of difference of this second embodiment from the first embodiment lies in the construction of the movable valve. In Figure 5, parts which are the same in construction as in the first embodiment are given the same reference symbols and detailed description thereof is dispensed with.

As shown in Figure 5, the movable valve 7 has a pin 7b and hollow floating section 7c. The floating section 7c comprises a resilient member having resilience being made for example of silicone rubber, that is capable of free movement within the large-diameter section 6b of the exhaust port 6. When the epoxy resin 3 is pressurized after closure of the exhaust port 6, this hollow section is deformed into an oval shape.

### (Modified example)

Also, as shown in Figure 6, processing costs can be reduced by making the floating section 7d dome-shaped. Forming an air reservoir 15 between the interior of the dome of the floating section 7d and the resin 3 ensures that buoyancy is not lost.

With the metal mold for resin molding according to this second embodiment, even more change of pressure can be absorbed by the hollow floating section 7b, and a similar effect to that of the first embodiment can be obtained.

## Claims

1. A metal mold for resin molding comprising:
(i) a metal mold (1, 2) formed with a cavity (4) for obtaining a molding of a prescribed shape;
(ii) an injection port (5), for injection of epoxy resin (3) into said cavity (4), arranged at a lower part of said metal mold;
(iii) an exhaust port (6), for exhausting air within said cavity (4), provided in an upper part of said metal mold; and
(iv) a movable valve (7) having a resilient member adapted to close said exhaust port (6) in response to filling of an interior of said cavity with said epoxy resin;
wherein said exhaust port (6) comprises:
(a) a small-diameter section (6a) connected with said cavity (4);
(b) a large-diameter intermediate section (6b); and
(c) an exhaust section (6c) communicating with an outside; and
wherein said movable valve (7) comprises a floating section (7a) and a pin (7b),
the floating section (7a) of said movable valve is arranged to be freely movable in a vertical direction in said large-diameter intermediate section (6b); and wherein
the floating section (7a) of the movable valve (7) is adapted, in response to pressurization of said epoxy resin, after closure of said exhaust port (6) by said floating section (7a) moving upwards in response to filling of the cavity, to deform and to cause a change of pressure to occur in gradual fashion.

2. The metal mold for resin molding according to claim 1,
wherein a shape of said floating section (7a) is dome-shaped.

3. The metal mold for resin molding according to claim 1,
wherein the length of said small-diameter section (6a) is 10 mm to 50 mm.

## Patentansprüche

1. Metallform für Harzformung, umfassend:
(i) eine Metallform (1, 2), die mit einer Aushöhlung (4) gebildet ist zum Erhalten einer Form einer vorbestimmten Gestalt;
(ii) eine Einspritzmündung (5), zum Einspritzen von Epoxyharz (3) in die Aushöhlung (4), angeordnet an einem unteren Teil der Metallform;
(iii) eine Auslassmündung (6) zum Auslassen von Luft in der Aushöhlung (4), bereitgestellt an einem oberen Teil der Metallform;
(iv) ein bewegliches Ventil (7) mit einem federnden Glied, das ausgebildet ist, um die Auslassmündung (6) zu schließen, ansprechend auf ein Füllen eines Inneren der Aushöhlung mit dem Epoxyharz;
wobei die Auslassmündung (6) umfasst:
(a) einen Bereich kleinen Durchmessers (6a), der mit der Aushöhlung (4) verbunden ist;
(b) einen Zwischenbereich (6b) großen Durchmessers; und
(c) einen Auslassbereich (6c), der mit einer Umgebung in Verbindung steht; und
wobei das bewegliche Ventil (7) einen Schwimmer-Bereich (7a) und einen Pin (7b) umfasst,
wobei der Schwimmer-Bereich (7a) des beweglichen Ventils angeordnet ist, um frei beweglich in einer vertikalen Richtung in dem Zwischenbereich (6b) großen Durchmessers zu sein; und wobei
der Schwimmer-Bereich (7a) des beweglichen Ventils (7) ausgebildet ist, um ansprechend auf Druckaufbau des Epoxyharzes nach Schließen der Auslassmündung (6) durch den fließenden Bereich (7a), sich aufwärts zu bewegen ansprechend auf das Füllen der Aushöhlung, um zu deformierend und, um eine Druckänderung in einer graduellen Weise hervorzurufen.

2. Metallform für Harzformung nach Anspruch 1, wobei eine Gestalt des Schwimmer-Bereichs (7a) kuppelförmig ist.

3. Metallform für Harzformung nach Anspruch 1, wobei die Länge des Bereichs kleinen Durchmessers (6a) 10 mm bis 50 mm ist.

## Revendications

1. Moule métallique pour moulage de résine comprenant :
(i) un moule métallique (1, 2) formé avec une cavité (4) pour obtenir un moulage d'une forme voulue ;
(ii) un orifice d'injection (5), pour l'injection de résine époxy (3) dans ladite cavité (4), agencé dans une partie inférieure dudit moule métallique ;
(iii) un orifice d'évacuation (6), pour évacuer l'air dans ladite cavité (4), placé dans une partie supérieure dudit moule métallique ; et
(iv) une soupape mobile (7) comportant un élément élastique adapté pour fermer ledit orifice d'évacuation (6) en réponse au remplissage d'un intérieur de ladite cavité avec ladite résine époxy ;
dans lequel ledit orifice d'évacuation (6) comprend :
(a) une section de petite diamètre (6a) reliée à ladite cavité (4) ;
(b) une section intermédiaire de grand diamètre (6b) ; et
(c) une section d'évacuation (6c) communiquant avec un extérieur ; et
dans lequel ladite soupape mobile (7) comprend une section flottante (7a) et un axe (7b),
la section flottante (7a) de ladite soupape mobile est agencée pour être mobile librement dans une direction verticale dans ladite section intermédiaire de grand diamètre (6b) ; et dans lequel
la section flottante (7a) de la soupape mobile (7) est adaptée, en réponse à la mise sous pression de ladite résine époxy, après la fermeture dudit orifice d'évacuation (6) par ladite section flottante (7a) se déplaçant vers le haut en réponse au remplissage de la cavité, pour se déformer et pour provoquer l'apparition d'un changement de pression de façon progressive.

2. Moule métallique pour moulage de résine selon la revendication 1,
dans lequel une forme de ladite section flottante (7a) est une forme de dôme.

3. Moule métallique pour moulage de résine selon la revendication 1,
dans lequel la longueur de ladite section de petit diamètre (6a) est de 10 mm à 50 mm.
